# FASCICULE DE BREVET EUROPEEN

(11) **EP 3 844 067 B1**
(45) Date de publication et mention de la délivrance du brevet: **29.03.2023**
(21) Numéro de dépôt: 19774156.4
(22) Date de dépôt: 30.08.2019
(51) Int. Cl.: B64F 5/50, B66C 1/10, B64D 29/00, B64D 33/02

(54) **ENSEMBLE ET PROCÉDÉ DE MANUTENTION D'UN ENSEMBLE PROPULSIF D'AÉRONEF**
VORRICHTUNG UND VERFAHREN ZUR HANDHABUNG EINER FLUGZEUGANTRIEBSANORDNUNG
HANDLING ASSEMBLY AND METHOD FOR HANDLING AN AIRCRAFT PROPULSION ASSEMBLY

(30) Priorité: 31.08.2018 FR 1857868
(43) Date de publication de la demande: 07.07.2021
(73) Titulaire: Safran Nacelles, 76700 Gonfreville-l'Orcher (FR)
(72) Inventeur: BOILEAU, Patrick, 77550 MOISSY CRAMAYEL (FR)
(74) Mandataire: Germain Maureau
(86) Numéro de dépôt international: PCT/FR2019/052001
(87) Numéro de publication internationale: WO 2020/043993

(56) Documents cités:
- FR-A1- 3 018 773
- GB-A- 2 394 940
- US-A- 5 870 824
- US-A1- 2016 376 015
- US-B1- 6 485 247

## Description

La présente invention se rapporte à un ensemble de manutention d'un ensemble propulsif d'aéronef et à un procédé de manutention d'un tel ensemble propulsif d'aéronef.

Un aéronef multimoteur est mû par plusieurs ensembles propulsifs comprenant chacun un turboréacteur logé dans une nacelle.

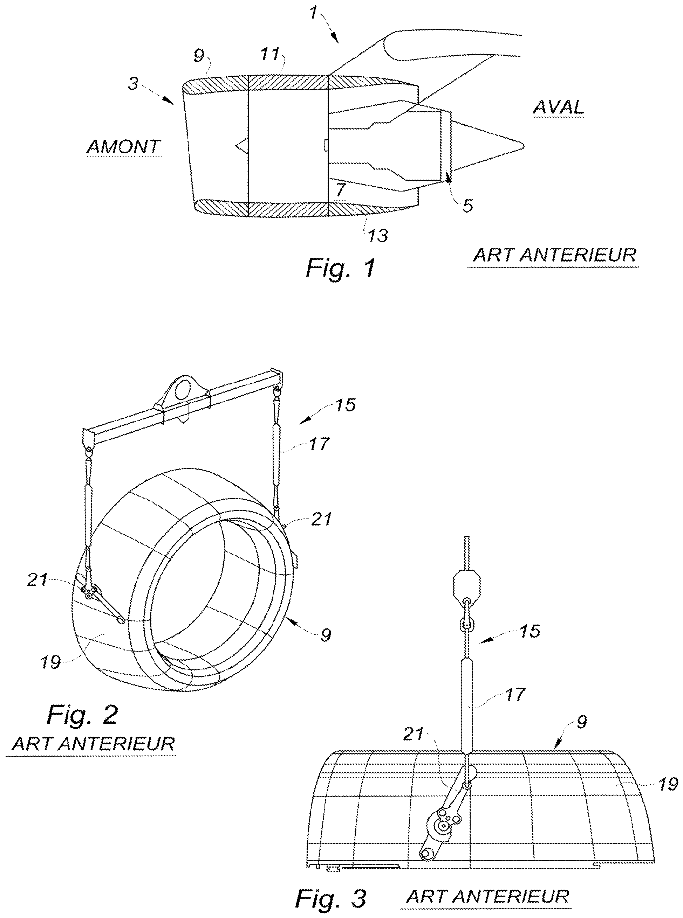

Comme cela est représenté à la figure 1, un ensemble propulsif 1 comprend une nacelle 3 et un turboréacteur 5 par exemple du type double flux, apte à générer, par l'intermédiaire des aubes de la soufflante en rotation, un flux de gaz chauds (également dénommé flux primaire) et un flux d'air froid (également dénommé flux d'air secondaire) qui circule à l'extérieur du turboréacteur à travers un passage annulaire 7, également appelé veine annulaire, formé entre deux parois concentriques de la nacelle. Les flux primaire et secondaire sont éjectés du turboréacteur par l'arrière de la nacelle.

La nacelle présente généralement une structure tubulaire comprenant une section amont, ou entrée d'air 9, située en amont du turboréacteur, une section médiane 11 destinée à entourer une soufflante du turboréacteur, une section aval 13, destinée à entourer la chambre de combustion du turboréacteur, embarquant un dispositif d'inversion de poussée, et peut être terminée par une tuyère d'éjection située en aval du turboréacteur.

Afin de réaliser des opérations de maintenance de la nacelle, il est souhaitable de pouvoir manipuler l'entrée d'air de la nacelle, indépendamment de ses sections médiane et aval.

On se réfère à la figure 2 illustrant une réalisation de l'art antérieur permettant de manipuler une entrée d'air.

L'ensemble de manutention 15 de l'art antérieur comporte deux élingues 17, reliées et fixées en leur extrémité inférieure à une paroi externe 19 de l'entrée d'air 9 de la nacelle en contact avec le flux d'air extérieur s'écoulant autour de la nacelle lorsque la nacelle est en fonctionnement.

Pour ce faire, la nacelle comporte au niveau de sa paroi externe 19 deux points de fixation 21 ou plus, formant des points de hissage sur lesquels sont montées des ferrures supportant les élingues 17.

Lorsque les élingues 17 sont montées sur les points de hissage 21 de l'entrée d'air 9, un opérateur peut manipuler l'entrée d'air, par exemple comme illustré à la figure 3 en la faisant basculer verticalement afin de pouvoir la déposer sur le sol dans cette position verticale.

Une problématique récurrente des avionneurs est celle de réduire les perturbations aérodynamiques de la nacelle. Pour ce faire, les fabricants de nacelles cherchent à rendre lisse certaines surfaces de la nacelle, en particulier la paroi externe de la nacelle.

Ce but peut être en partie atteint en prévoyant une nacelle comportant une entrée d'air dite laminaire, c'est-à-dire une entrée d'air exemptes d'accident aérodynamique, c'est-à-dire notamment exempte des points de fixation des ferrures sur lesquelles sont destinées à être montées les élingues de l'ensemble de manutention de l'art antérieur.

La suppression des points de fixation de la paroi externe de l'entrée d'air de la nacelle rend incompatible l'utilisation de cet ensemble de manutention de l'art antérieur sur des nacelles laminaires.

Le document GB2394940 décrit un chariot de retrait de capot moteur pour permettre un retrait facile et sûr d'un capot d'un aéronef de l'état de la technique.

La présente invention vise à résoudre les inconvénients ci-dessus en proposant un ensemble de manutention d'une entrée d'air d'une nacelle, en particulier du type qui ne comporte aucun point d'attache au niveau de sa paroi externe.

Pour ce faire, la présente invention concerne un ensemble de manutention d'un ensemble propulsif comportant une nacelle et un turboréacteur d'aéronef, ledit ensemble de manutention étant caractérisé en ce qu'il comporte :
- une enveloppe de manutention recouvrant au moins la demi-circonférence d'une paroi externe d'une entrée d'air de la nacelle, lorsque ledit ensemble propulsif est monté sur ledit ensemble de manutention,
- au moins deux interfaces de fixation d'élingues, lesdites élingues étant destinées à être reliées à un système de hissage externe audit ensemble de manutention.

Ainsi, en prévoyant un ensemble de manutention comportant une enveloppe de manutention conçue pour recevoir des interfaces de fixation d'élingues, l'ensemble de manutention peut être utilisé en particulier sur les nacelles dont l'entrée d'air est laminaire, c'est-à-dire qui ne comporte pas de points de fixation de ferrures sur lesquelles sont destinées à être montées des élingues dans l'art antérieur.

Selon des caractéristiques optionnelles de l'ensemble de manutention de l'invention :
- ladite enveloppe de manutention comporte en outre au moins deux poches de réception desdits au moins deux interfaces de fixation d'élingues, conçues pour maintenir lesdits au moins deux interfaces de fixation d'élingues en position sur ladite enveloppe de manutention ;
- l'interface de fixation d'élingues comporte :
   ∘ une plaque, conformée pour être insérée dans la poche de réception, et
   ∘ une ferrure de fixation d'élingues, solidaire de ladite plaque, conçue pour recevoir l'élingue. ;
- les poches de réception desdits au moins deux interfaces de fixation d'élingues sont positionnées de part et d'autre d'un plan longitudinal de l'ensemble de manutention ;
- les poches de réception desdits au moins deux interfaces de fixation comportent un moyen de fermeture de ladite poche de réception sur l'enveloppe de manutention ;
- le moyen de fermeture de ladite poche de réception sur l'enveloppe de manutention est une bande auto-agrippante de type Velcro^{®} ou un zip ;
- l'enveloppe de manutention comporte une extension latérale conformée pour recouvrir au moins partiellement la circonférence d'un bord aval de l'entrée d'air de la nacelle lorsque l'ensemble propulsif est monté sur l'ensemble de manutention ;
- selon un mode de réalisation, l'ensemble de manutention comporte un élément souple gonflable, venant en contact, lorsque ledit élément souple gonflable est gonflé, au moins avec une paroi interne de l'entrée d'air de la nacelle lorsque l'ensemble propulsif est monté sur ledit ensemble de manutention ;
- l'élément souple gonflable occupe la totalité de l'espace interne défini par la paroi interne de l'entrée d'air de la nacelle lorsque ledit élément souple gonflable est gonflé et lorsque l'ensemble propulsif est monté sur ledit ensemble de manutention ;
- selon une réalisation, l'élément souple gonflable comporte une excroissance amont venant en contact avec un bord d'attaque de l'entrée d'air de la nacelle lorsque ledit élément souple gonflable est gonflé et lorsque l'ensemble propulsif est monté sur ledit ensemble de manutention ;
- l'ensemble de manutention comporte des sangles de fixation principales dont une première extrémité est attachée à l'élément souple gonflable et dont une deuxième extrémité est attachée à l'enveloppe de manutention ;
- l'ensemble de manutention comporte une sangle maîtresse circonférentielle, positionnée sur une bride de fixation de l'entrée d'air de la nacelle en amont d'un carter de soufflante du turboréacteur ;
- l'ensemble de manutention comporte des sangles de fixation additionnelles dont une première extrémité est attachée à la sangle maîtresse circonférentielle et dont une deuxième extrémité est attachée à l'enveloppe de manutention.

La présente invention concerne aussi un procédé de manutention d'un ensemble propulsif, ledit ensemble propulsif comprenant :
- une nacelle comprenant un entrée d'air, et
- un turboréacteur d'aéronef, comportant un carter de soufflante sur lequel est attachée ladite entrée d'air de ladite nacelle,
ledit procédé de manutention étant caractérisé en ce qu'il comporte les étapes successives suivantes visant à :
- recouvrir au moins la demi-circonférence d'une paroi externe de l'entrée d'air de la nacelle par une enveloppe de manutention ;
- positionner des interfaces de fixation d'élingues sur l'enveloppe de manutention ;
- relier les interfaces de fixation d'élingues à un système de hissage externe audit ensemble de manutention par des élingues ;
- détacher ladite entrée d'air du carter de soufflante du turboréacteur.

Dans certains modes de réalisation, lors de l'étape visant à positionner les interfaces de fixation d'élingues sur l'enveloppe de manutention, les interfaces de fixation d'élingues sont positionnées à l'intérieur des poches de réception de l'enveloppe de manutention.

Dans certains modes de réalisation, le procédé de manutention comporte une première étape supplémentaire antérieure à l'étape consistant à recouvrir au moins la demi-circonférence de la paroi externe de l'entrée d'air de la nacelle par l'enveloppe de manutention, la première étape supplémentaire visant à gonfler un élément souple gonflable de l'ensemble de manutention à l'intérieur d'un espace interne défini par une paroi interne de l'entrée d'air de la nacelle jusqu'à ce que ledit élément souple vienne en contact au moins avec la paroi interne de l'entrée d'air de la nacelle.

Dans certains modes de réalisation, le procédé de manutention comporte une deuxième étape supplémentaire postérieure à l'étape consistant à détacher l'entrée d'air du carter de soufflante du turboréacteur, la deuxième étape supplémentaire visant à sécuriser l'ensemble de manutention en attachant une première extrémité de sangles de fixation principales à l'élément souple gonflable et une deuxième extrémité desdites sangles de fixation principales à l'enveloppe de manutention.

Selon une réalisation du procédé de manutention de l'invention, il comporte une troisième étape supplémentaire antérieure à l'étape selon laquelle on détache l'entrée d'air du carter de soufflante du turboréacteur, visant à installer une sangle maîtresse circonférentielle sur une bride de fixation de l'entrée d'air de la nacelle en amont du carter de soufflante du turboréacteur et à attacher ladite sangle maîtresse à l'élément souple gonflable de l'enveloppe de manutention par des sangles de fixation additionnelles.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe longitudinale d'un ensemble propulsif de l'art antérieur ;
- les figures 2 et 3 illustrent un ensemble de manutention de l'art antérieur supportant une entrée d'air d'une nacelle de turboréacteur ;
- les figures 4 et 5 représentent en vue isométrique l'ensemble de manutention obtenu selon un premier mode de réalisation de l'invention, supportant une entrée d'air de nacelle de turboréacteur d'aéronef ;
- la figure 6 est une vue de face et de détail de la zone VI de la figure 5 ;
- la figure 7 est une vue isométrique de l'ensemble de manutention obtenu selon un deuxième mode de réalisation de l'invention, supportant une entrée d'air de nacelle de turboréacteur d'aéronef ;
- les figures 8 à 10 illustrent une séquence de démontage d'une entrée d'air, l'entrée d'air étant manipulée par l'ensemble de manutention obtenu selon le deuxième mode de réalisation de l'invention.

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » ou « intérieur » et « externe » ou « extérieur » en référence à l'éloignement radial par rapport à l'axe longitudinal de l'ensemble propulsif, l'expression « interne » ou « intérieur » définissant une zone radialement plus proche de l'axe longitudinal de la nacelle, par opposition à l'expression « externe » ou « extérieur ».

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal de l'ensemble de manutention, l'axe longitudinal de l'ensemble de manutention correspondant à l'axe longitudinal de l'ensemble propulsif lorsque ce dernier est supporté par l'ensemble de manutention.

En outre, sur l'ensemble des figures, des références identiques ou analogues représentent des organes ou ensembles d'organes identiques ou analogues.

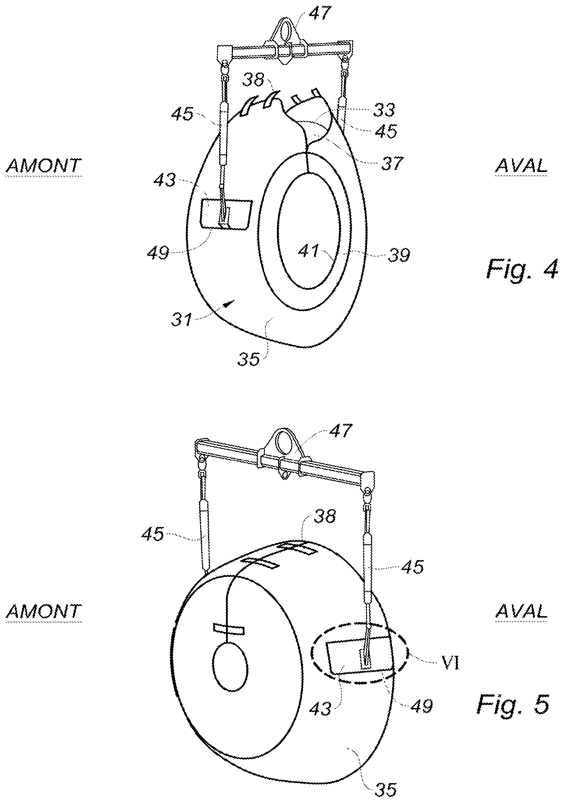

On se réfère aux figures 4 et 5, illustrant en vue isométrique l'ensemble de manutention 31 obtenu selon un premier mode de réalisation de l'invention, supportant une entrée d'air 33 d'une nacelle de turboréacteur, l'ensemble de manutention étant respectivement illsutré aux figure 4 et 5 en position ouverte et en position fermée.

L'ensemble de manutention 31 comporte une enveloppe de manutention 35 conçue pour supporter une entrée d'air de nacelle de turboréacteur. A cet effet, l'enveloppe de manutention 35 peut par exemple être obtenue en tout tissu technique tissé tel que du Cordura^{®}, en tissu technique non tissé ou en PVC armé.

L'enveloppe de de manutention 35 recouvre la paroi externe 37 de l'entrée d'air 33. Dans ce premier mode de réalisation de l'ensemble de manutention 31, l'enveloppe de manutention 35 recouvre préférentiellement la totalité de la circonférence de la paroi externe 37 de l'entrée d'air lorsque l'ensemble de manutention se trouve en position fermée. Il peut cependant être envisagé de dimensionner l'enveloppe de manutention 31 de façon à ce qu'elle recouvre uniquement la demi-circonférence de la paroi externe 37 de l'entrée d'air lorsque l'ensemble de manutention est en position fermée.

La fermeture de l'enveloppe de manutention 35 est obtenue grâce à un moyen de fermeture, par exemple positionné « à douze heures » lorsque l'ensemble de manutention supporte une entrée d'air. Un tel moyen de fermeture peut par exemple être obtenu par des bandes 38 auto-aggripantes de type Velcro^{®}.

Selon une réalisation, l'enveloppe de manutention 31 comporte une extension latérale 39 conformée pour recouvrir tout ou partie de la circonférence d'un bord aval 41 de l'entrée d'air 33 de la nacelle.

L'ensemble de manutention 31 comporte en outre deux interfaces 43 (un seul est visible aux figures 4 et 5) permettant la fixation d'élingues 45. Les élingues 45 sont destinées à être reliées à un système de hissage 47, externe à l'ensemble de manutention 31, qui permet de manipuler l'ensemble de manutention supportant l'entrée d'air de la nacelle. L'enveloppe de manutention 35 comporte à cet effet deux poches 49 de réception des interfaces de fixation d'élingues. Les poches 49 de réception des interfaces 43 de fixation d'élingues sont positionnées de préférence de part et d'autre d'un plan longitudinal (L, V) de l'ensemble de manutention. Les poches 49 de réception sont conçues pour maintenir les interfaces 43 de fixation d'élingues en position sur l'enveloppe de manutention 35.

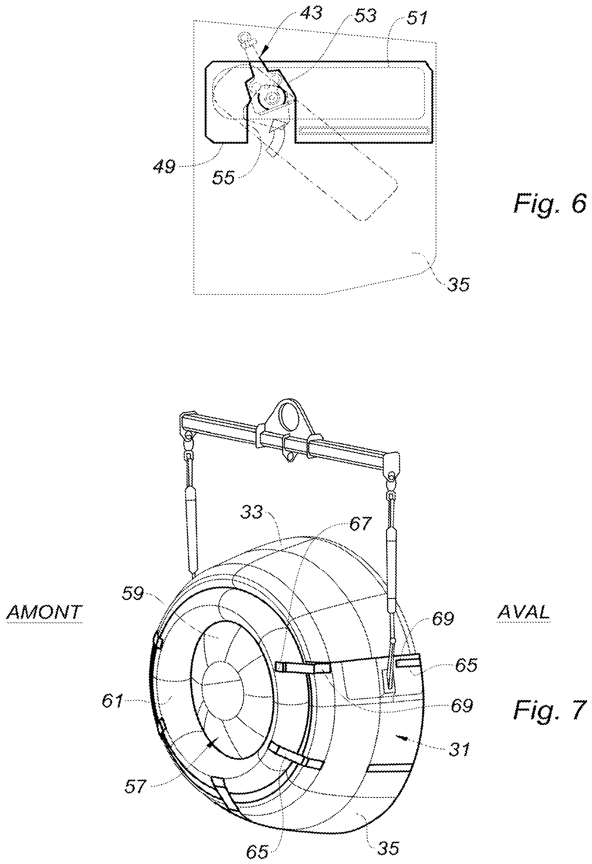

On se réfère à la figure 6, qui est une vue de face et de détail de la zone VI de la figure 5 et qui illustre la poche 49 de réception dans laquelle est insérée un interface 43 de fixation d'élingue.

Selon une réalisation, l'interface 43 de fixation d'élingues comporte une plaque 51 et une ferrure 53 solidaire de la plaque 51, sur laquelle vient se fixer l'élingue 45. La plaque 51 est conformée pour être insérée dans la poche 49 de réception. La poche 49 de réception adopte une forme générale de rectangle, qui s'étend le long de l'axe longitudinal L défini par le trièdre direct L, V, T représenté aux figures.

La poche 49 de réception présente une ouverture 55 qui reçoit la ferrure 53 de l'interface 43 de fixation de l'élingue. La poche 49 de réception est en outre équipée d'un moyen de fermeture, permettant sa fermeture sur l'enveloppe de manutention 35, pouvant être obtenu grâce à une bande auto-agrippante de type Velcro^{®} ou grâce à un zip.

On se réfère à la figure 7, illustrant en vue isométrique l'ensemble de manutention 31 obtenu selon un deuxième mode de réalisation de l'invention, supportant l'entrée d'air 33 d'une nacelle de turboréacteur.

Selon ce deuxième mode de réalisation, l'ensemble de manutention 31 comporte en outre un élément souple gonflable 57, pouvant par exemple être obtenu en une matière plastique telle que PVC.

L'élément souple gonflable 57 comporte un ballon central 59 adoptant une forme générale cylindrique. L'élément souple gonflable 57 vient en contact, lorsqu'il est gonflé, avec une paroi interne de l'entrée d'air 33 de la nacelle lorsque l'ensemble propulsif est monté sur ledit ensemble de manutention, la paroi interne de l'entrée d'air étant définie par la paroi qui vient au contact du flux d'air admis par l'ensemble propulsif lorsque l'ensemble propulsif est en fonctionnement. Lorsque l'élément souple gonflable 57 est gonflé, il occupe la totalité de l'espace interne défini par la paroi interne de l'entrée d'air de la nacelle lorsque l'ensemble propulsif est monté sur l'ensemble de manutention 31.

Selon une variante de réalisation, l'élément souple gonflable 57 comporte une excroissance amont 61, ou boudin amont, pouvant adopter une forme générale torique. Lorsqu'elle est gonflée, l'excroissance amont 61 vient en contact avec un bord d'attaque de l'entrée d'air 33 de la nacelle lorsque l'ensemble propulsif est monté sur l'ensemble de manutention 31.

L'excroissance amont 61 peut faire partie intégrante de l'élément souple gonflable 57, c'est-à-dire que le ballon central 59 est prolongé en sa partie amont par l'excroissance amont 61.

En variante, l'excroissance amont 61 peut être rapportée au ballon central 59. Dans ce cas, l'élément souple gonflable 57 comporte deux sous-ensembles indépendants formés par le ballon central 59 d'une part, et par l'excroissance amont 59 d'autre part.

La présence d'une telle excroissance amont 61 définit une butée au niveau du bord d'attaque de l'entrée d'air 33 lorsque l'ensemble de manutention 31 supporte l'entrée d'air.

Cela permet de protéger l'entrée d'air de la nacelle de chocs éventuels pouvant survenir lors de sa manutention.

Selon une réalisation de l'ensemble de manutention 31 obtenu selon ce deuxième mode de réalisation, l'ensemble de manutention peut comporter une pluralité de sangles de fixation 65 principales réparties sur la circonférence de l'enveloppe de manutention 35. Chaque sangle de fixation 65 comporte une première extrémité 67 attachée à l'élément souple gonflable 57 et une deuxième extrémité 69 attachée à l'enveloppe de manutention 35. A cet effet, l'excroissance amont 61 et le ballon central 59 comportent une pluralité de points d'ancrage des sangles de fixation principales. Une fois en position, les sangles de fixation principales assurent le maintien de l'enveloppe de manutention sur l'élément souple gonflable. Les sangles de fixation permettent ainsi de tendre l'enveloppe de manutention autour de l'entrée d'air.

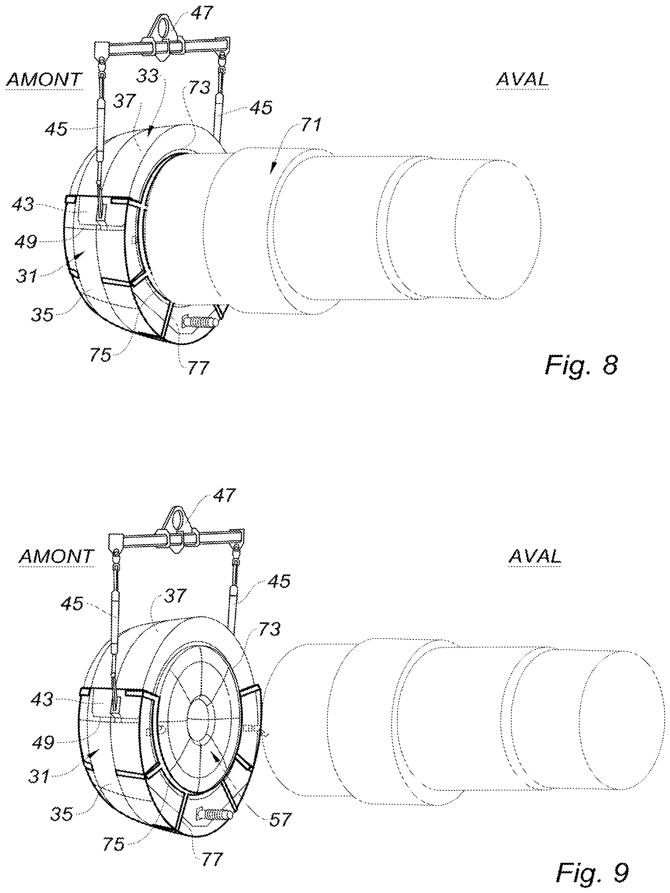

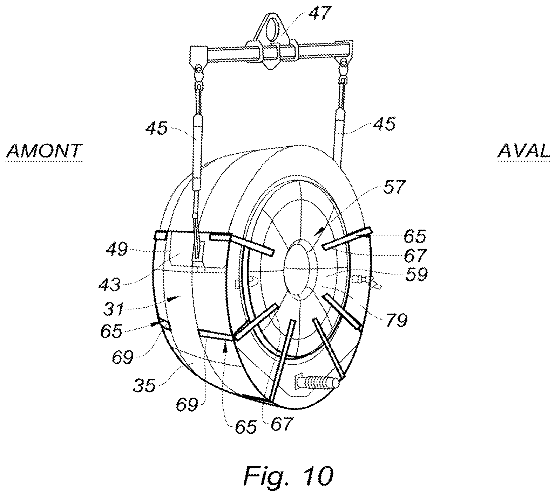

Le procédé de manutention mis en oeuvre par l'ensemble de manutention 31 obtenu selon le deuxième mode de réalisation de l'invention est à présent décrit en référence aux figures 8 à 10 qui illustrent une séquence de démontage de l'entrée d'air 33.

Dans l'exemple représenté aux figures 8 à 10, on cherche à manipuler l'entrée d'air 33 d'une nacelle. Les sections médiane et aval de la nacelle ont été occultées de la figure pour une meilleure visibilité. L'entrée d'air 33 de la nacelle est montée sur le carter de soufflante du turboréacteur 71 par l'intermédiaire d'une bride de fixation 73 aval circonférentielle.

On gonfle l'élément souple gonflable 57 de l'ensemble de manutention 31 à l'intérieur de l'espace interne défini par la paroi interne de l'entrée d'air de la nacelle. Une fois gonflé, l'élément souple gonflable 57 vient en contact avec la paroi interne de l'entrée d'air de la nacelle. Si l'élément gonflable comporte l'excroissance amont, cette excroissance amont est également gonflée à ce stade.

On recouvre ensuite la paroi externe 37 de l'entrée d'air 33 de la nacelle grâce à l'enveloppe de manutention 35. Comme on l'a vu précédemment, au moins la demi-circonférence de la paroi externe de l'entrée d'air est recouverte est recouverte par l'enveloppe de manutention 35.

On procède ensuite à une ouverture ou à un démontage des capots de soufflante (non représentés) de la nacelle, ces capots entourant le carter de soufflante du turboréacteur.

Il est à ce stade rendu possible d'installer, optionnellement, une sangle maîtresse 75 circonférentielle sur la bride de fixation 73 de l'entrée d'air de la nacelle sur le carter de soufflante du turboréacteur 71, puis d'attacher la bande maîtresse 75 à l'enveloppe de manutention 35 par des sangles de fixation 77 additionnelles.

On positionne ensuite les interfaces 43 de fixation d'élingues à l'intérieur des poches 49 de réception de ces interfaces, qui font partie de l'enveloppe de manutention 35. Lorsque les interfaces 43 de fixation sont positionnées dans les poches 49 de réception, on ferme les poches 49 grâce au moyen de fermeture, et on relie les interfaces de fixation 43 d'élingues au système de hissage 47, par l'intermédiaire des élingues 45.

Lorsque l'entrée d'air 33 est reliée au système de hissage 47, on détache l'entrée d'air 33 du carter de soufflante du turboréacteur 71 (figure 9).

On sécurise l'ensemble de de manutention grâce aux sangles de fixation 65 principales. Pour ce faire, on attache une première extrémité 67 des sangles de fixation principales à l'élément souple gonflable 57 et une deuxième extrémité 69 des sangles de fixation principales à l'enveloppe de manutention 35.

Selon une réalisation, les sangles de fixation 65 principales relient l'enveloppe de manutention 35 à l'excroissance amont de l'élément souple gonflable 57 d'une part, et au ballon central 59 de l'élément souple gonflable 57 d'autre part, au niveau d'un bord aval 79 du ballon central 59 de l'élément souple gonflable 57.

Comme il va de soi, la présente invention ne se limite pas aux seules formes de réalisation de cet ensemble de manutention et de ce procédé de manutention, décrites ci-dessus uniquement à titre d'exemples illustratifs, mais elle embrasse au contraire toutes les variantes qui entrent dans le cadre de l'invention définie dans les revendications attachées.

## Revendications

1. Ensemble de manutention (31) d'un ensemble propulsif comportant une nacelle et un turboréacteur d'aéronef, ledit ensemble de manutention (31) étant **caractérisé en ce qu'**il comporte :
- une enveloppe de manutention (35) recouvrant au moins la demi-circonférence d'une paroi externe (37) d'une entrée d'air (33) de la nacelle, lorsque ledit ensemble propulsif est monté sur ledit ensemble de manutention (31),
- au moins deux interfaces (43) de fixation d'élingues, lesdites élingues étant destinées à être reliées à un système de hissage (47) externe audit ensemble de manutention (31).

2. Ensemble de manutention (31) selon la revendication 1, dans lequel ladite enveloppe de manutention (35) comporte en outre au moins deux poches (49) de réception desdits au moins deux interfaces (43) de fixation d'élingues, conçues pour maintenir lesdits au moins deux interfaces (43) de fixation d'élingues en position sur ladite enveloppe de manutention (35).

3. Ensemble de manutention (31) selon la revendication 2, **caractérisé en ce que** l'interface (43) de fixation d'élingues comporte :
- une plaque (51), conformée pour être insérée dans la poche (49) de réception, et
- une ferrure (53) de fixation d'élingues, solidaire de ladite plaque (51), conçue pour recevoir l'élingue.

4. Ensemble de manutention (31) selon l'une des revendications 2 ou 3, **caractérisé en ce que** les poches (49) de réception desdits au moins deux interfaces (43) de fixation d'élingues sont positionnées de part et d'autre d'un plan longitudinal de l'ensemble de manutention (31).

5. Ensemble de manutention (31) selon l'une quelconque des revendications 1 à 4, **caractérisé en ce que** l'enveloppe de manutention (35) comporte une extension latérale (39) conformée pour recouvrir au moins partiellement la circonférence d'un bord aval (41) de l'entrée d'air (33) de la nacelle lorsque l'ensemble propulsif est monté sur l'ensemble de manutention (31).

6. Ensemble de manutention (31) selon l'une quelconque des revendications 1 à 5, **caractérisé en ce qu'**il comporte un élément souple gonflable (57), venant en contact, lorsque ledit élément souple gonflable (57) est gonflé, au moins avec une paroi interne de l'entrée d'air (33) de la nacelle lorsque l'ensemble propulsif est monté sur ledit ensemble de manutention (31).

7. Ensemble de manutention (31) selon la revendication 6, **caractérisé en ce que** l'élément souple gonflable (57) occupe la totalité de l'espace interne défini par la paroi interne de l'entrée d'air (33) de la nacelle lorsque ledit élément souple gonflable (57) est gonflé et lorsque l'ensemble propulsif est monté sur ledit ensemble de manutention (31).

8. Ensemble de manutention (31) selon l'une des revendications 6 ou 7, **caractérisé en ce que** l'élément souple gonflable (57) comporte une excroissance amont (61) venant en contact avec un bord d'attaque de l'entrée d'air (33) de la nacelle lorsque ledit élément souple gonflable (57) est gonflé et lorsque l'ensemble propulsif est monté sur ledit ensemble de manutention (31).

9. Ensemble de manutention (31) selon l'une quelconque des revendications 6 à 8, **caractérisé en ce qu'**il comporte des sangles de fixation principales (65) dont une première extrémité (67) est attachée à l'élément souple gonflable et dont une deuxième extrémité (69) est attachée à l'enveloppe de manutention (35).

10. Ensemble de manutention (31) selon l'une quelconque des revendications 6 à 9, **caractérisé en ce qu'**il comporte une sangle maîtresse circonférentielle (75), positionnée sur une bride de fixation de l'entrée d'air (33) de la nacelle en amont d'un carter de soufflante du turboréacteur.

11. Ensemble de manutention (31) selon la revendication 10, **caractérisé en ce qu'**il comporte des sangles de fixation additionnelles (77) dont une première extrémité est attachée à la sangle maîtresse (75) circonférentielle et dont une deuxième extrémité est attachée à l'enveloppe de manutention (35).

12. Procédé de manutention d'un ensemble propulsif, ledit ensemble propulsif comprenant :
- une nacelle comprenant un entrée d'air (33), et
- un turboréacteur d'aéronef (71), comportant un carter de soufflante sur lequel est attachée ladite entrée d'air (33) de ladite nacelle,
ledit procédé de manutention étant **caractérisé en ce qu'**il comporte les étapes successives suivantes visant à :
- recouvrir au moins la demi-circonférence d'une paroi externe (37) de l'entrée d'air (33) de la nacelle par une enveloppe de manutention (35) d'un ensemble de manutention selon l'une des revendications 1 à 11 ;
- positionner des interfaces (43) de fixation d'élingues de l'ensemble de manutention selon l'une des revendications 1 à 11 sur l'enveloppe de manutention (35) ;
- relier les interfaces (43) de fixation d'élingues à un système de hissage externe audit ensemble de manutention (31) par des élingues ;
- détacher ladite entrée d'air (33) du carter de soufflante du turboréacteur (71).

13. Procédé de manutention d'un ensemble propulsif selon la revendication 12, **caractérisé en ce qu'**il comporte une première étape supplémentaire antérieure à l'étape consistant à recouvrir au moins la demi-circonférence de la paroi externe de l'entrée d'air de la nacelle par l'enveloppe de manutention, la première étape supplémentaire visant à gonfler un élément souple gonflable (57) de l'ensemble de manutention (31) à l'intérieur d'un espace interne défini par une paroi interne de l'entrée d'air (33) de la nacelle jusqu'à ce que ledit élément souple vienne en contact au moins avec la paroi interne de l'entrée d'air (33) de la nacelle.

14. Procédé de manutention d'un ensemble propulsif selon l'une des revendications 12 ou 13, **caractérisé en ce qu'**il comporte une deuxième étape supplémentaire postérieure à l'étape consistant à détacher l'entrée d'air du carter de soufflante du turboréacteur, la deuxième étape supplémentaire visant à sécuriser l'ensemble de manutention (31) en attachant une première extrémité (67) de sangles de fixation principales (65) à l'élément souple gonflable (57) et une deuxième extrémité (69) desdites sangles de fixation principales (65) à l'enveloppe de manutention (35).

15. Procédé de manutention d'un ensemble propulsif selon la revendication 14, **caractérisé en ce qu'**il comporte une troisième étape supplémentaire, antérieure à l'étape selon laquelle on détache l'entrée d'air (33) du carter de soufflante du turboréacteur (71), visant à installer une sangle maîtresse (75) circonférentielle sur une bride de fixation (73) de l'entrée d'air (33) de la nacelle en amont du carter de soufflante du turboréacteur et à attacher ladite sangle maîtresse (75) à l'élément souple gonflable de l'enveloppe de manutention (35) par des sangles de fixation additionnelles (77).

## Patentansprüche

1. Handhabungsanordnung (31) einer Antriebsanordnung, die eine Gondel und ein Flugzeugstrahltriebwerk umfasst, wobei die Handhabungsanordnung (31) **dadurch gekennzeichnet ist, dass** sie Folgendes umfasst:
- eine Handhabungsummantelung (35), die mindestens den halben Umfang einer Außenwand (37) eines Lufteinlasses (33) der Gondel bedeckt, wenn die Antriebsanordnung an der Handhabungsanordnung (31) montiert ist,
- mindestens zwei Schnittstellen (43) zum Befestigen von Schlingen, wobei die Schlingen dafür vorgesehen sind, mit einem Hebesystem (47) außerhalb der Handhabungsanordnung (31) verbunden zu werden.

2. Handhabungsanordnung (31) nach Anspruch 1, wobei die Handhabungsummantelung (35) ferner mindestens zwei Taschen (49) zum Aufnehmen der mindestens zwei Schnittstellen (43) zum Befestigen von Schlingen umfasst, die zum Halten der mindestens zwei Schnittstellen (43) zum Befestigen von Schlingen in Position auf der Handhabungsummantelung (35) konzipiert sind.

3. Handhabungsanordnung (31) nach Anspruch 2, **dadurch gekennzeichnet, dass** die Schnittstelle (43) zum Befestigen von Schlingen Folgendes umfasst:
- eine Platte (51), die dazu bestimmt ist, in die Aufnahmetasche (49) eingesetzt zu werden, und
- einen Beschlag (53) zum Befestigen von Schlingen, der fest mit der Platte (51) verbunden ist, die zur Aufnahme der Schlinge konzipiert ist.

4. Handhabungsanordnung (31) nach einem der Ansprüche 2 oder 3, **dadurch gekennzeichnet, dass** die Aufnahmetaschen (49) der mindestens zwei Schnittstellen (43) zum Befestigen von Schlingen zu beiden Seiten einer Längsebene der Handhabungsanordnung (31) positioniert sind.

5. Handhabungsanordnung (31) nach einem der Ansprüche 1 bis 4, **dadurch gekennzeichnet, dass** die Handhabungsummantelung (35) eine seitliche Verlängerung (39) umfasst, die ausgebildet ist, mindestens teilweise den Umfang einer stromabwärtigen Kante (41) des Lufteinlasses (33) der Gondel zu bedecken, wenn die Antriebsanordnung an der Handhabungsanordnung (31) montiert ist.

6. Handhabungsanordnung (31) nach einem der Ansprüche 1 bis 5, **dadurch gekennzeichnet, dass** sie ein aufblasbares flexibles Element (57), das, wenn das aufblasbare flexible Element (57) aufgeblasen ist, mindestens mit einer Innenwand des Lufteinlasses (33) der Gondel in Kontakt kommt, wenn die Antriebsanordnung an der Handhabungsanordnung (31) montiert ist.

7. Handhabungsanordnung (31) nach Anspruch 6, **dadurch gekennzeichnet, dass** das aufblasbare flexible Element (57) den gesamten Innenraum einnimmt, der durch die Innenwand des Lufteinlasses (33) der Gondel definiert ist, wenn das aufblasbare flexible Element (57) aufgeblasen ist und wenn die Antriebsanordnung an der Handhabungsanordnung (31) montiert ist.

8. Handhabungsanordnung (31) nach einem der Ansprüche 6 oder 7, **dadurch gekennzeichnet, dass** das aufblasbare flexible Element (57) einen stromaufwärtigen Vorsprung (61) umfasst, der mit einer Vorderkante des Lufteinlasses (33) der Gondel in Kontakt kommt, wenn das aufblasbare flexible Element (57) aufgeblasen ist und wenn die Antriebsanordnung an der Handhabungsanordnung (31) montiert ist.

9. Handhabungsanordnung (31) nach einem der Ansprüche 6 bis 8, **dadurch gekennzeichnet, dass** sie Hauptbefestigungsgurte (65) umfasst, von denen ein erstes Ende (67) an dem aufblasbaren flexiblen Element angebracht ist und von denen ein zweites Ende (69) an der Handhabungsummantelung (35) angebracht ist.

10. Handhabungsanordnung (31) nach einem der Ansprüche 6 bis 9, **dadurch gekennzeichnet, dass** sie einen umlaufenden Hauptgurt (75) umfasst, der an einem Befestigungsflansch des Lufteinlasses (33) der Gondel vor einem Gebläsegehäuse des Strahltriebwerks positioniert ist.

11. Handhabungsanordnung (31) nach Anspruch 10, **dadurch gekennzeichnet, dass** sie zusätzliche Befestigungsgurte (77) umfasst, von denen ein erstes Ende an dem umlaufenden Hauptgurt (75) angebracht ist und von denen ein zweites Ende an der Handhabungsummantelung (35) angebracht ist.

12. Verfahren zum Handhaben einer Antriebsanordnung, wobei die Antriebsanordnung Folgendes umfasst:
- eine Gondel, die einen Lufteinlass (33) aufweist, und
- ein Flugzeugstrahltriebwerk (71), umfassend ein Gebläsegehäuse, an dem der Lufteinlass (33) der Gondel angebracht ist,
wobei das Verfahren zum Handhaben **dadurch gekennzeichnet ist, dass** es die folgenden aufeinanderfolgenden Schritte umfasst, die darauf abzielen:
- mindestens den halben Umfang einer Außenwand (37) des Lufteinlasses (33) der Gondel durch eine Handhabungsummantelung (35) einer Handhabungsanordnung nach einem der Ansprüche 1 bis 11 zu bedecken;
- Schnittstellen (43) zum Befestigen von Schlingen der Handhabungsanordnung nach einem der Ansprüche 1 bis 11 an der Handhabungsummantelung (35) zu positionieren;
- die Schnittstellen (43) zum Befestigen von Schlingen mit einem Hebesystem außerhalb der Handhabungsanordnung (31) durch Schlingen zu verbinden;
- den Lufteinlass (33) von dem Gebläsegehäuse des Strahltriebwerks (71) zu trennen.

13. Verfahren zum Handhaben einer Antriebsanordnung nach Anspruch 12, **dadurch gekennzeichnet, dass** es einen ersten zusätzlichen Schritt vor dem Schritt des Bedeckens mindestens des halben Umfangs der Außenwand des Lufteinlasses der Gondel durch die Handhabungsummantelung aufweist, wobei der erste zusätzliche Schritt darauf abzielt, ein aufblasbares flexibles Element (57) der Handhabungsanordnung (31) innerhalb eines durch eine Innenwand des Lufteinlasses (33) der Gondel definierten Innenraums aufzublasen, bis das flexible Element mindestens mit der Innenwand des Lufteinlasses (33) der Gondel in Kontakt kommt.

14. Verfahren zum Handhaben einer Antriebsanordnung nach einem der Ansprüche 12 oder 13, **dadurch gekennzeichnet, dass** es einen zweiten zusätzlichen Schritt nach dem Schritt des Lösen des Lufteinlasses von dem Gebläsegehäuse des Strahltriebwerks aufweist, wobei der zweite zusätzliche Schritt darauf abzielt, die Handhabungsanordnung (31) durch Befestigen eines ersten Endes (67) der Hauptbefestigungsgurte (65) an dem aufblasbaren flexiblen Element (57) und eines zweiten Endes (69) der Hauptbefestigungsgurte (65) an der Handhabungsummantelung (35) zu sichern.

15. Verfahren zum Handhaben einer Antriebsanordnung nach Anspruch 14, **dadurch gekennzeichnet, dass** es einen dritten zusätzlichen Schritt vor dem Schritt aufweist, in dem der Lufteinlass (33) von dem Gebläsegehäuse des Strahltriebwerks (71) gelöst wir, wobei darauf abgezielt wird, einen umlaufenden Hauptgurt (75) an einem Befestigungsflansch (73) des Lufteinlasses (33) der Gondel stromaufwärts des Gebläsegehäuses des Strahltriebwerks einzurichten und den Hauptgurt (75) an dem aufblasbaren flexiblen Element der Handhabungsummantelung (35) durch zusätzliche Befestigungsgurte (77) anzubringen.

## Claims

1. An handling assembly (31) for handling a propulsion unit including a nacelle and an aircraft turbojet engine, said handling assembly (31) being **characterized in that** it includes:
- a handling envelope (35) covering at least the half-circumference of an outer wall (37) of an air inlet (33) of the nacelle, when said propulsion unit is mounted on said handling assembly (31),
- at least two interfaces (43) for fastening slings, said slings being intended to be connected to a hoisting system (47) external to said handling assembly (31).

2. The handling assembly (31) according to claim 1, wherein said handling envelope (35) further includes at least two pockets (49) for receiving said at least two interfaces (43) for fastening slings, designed to hold said at least two interfaces (43) for fastening slings in position on said handling envelope (35).

3. The handling assembly (31) according to claim 2, **characterized in that** the interface (43) for fastening slings includes:
- a plate (51), shaped to be inserted into the receiving pocket (49), and
- a sling fastening fitting (53), which is secured to said plate (51), designed to receive the sling.

4. The handling assembly (31) according to any of claims 2 or 3, **characterized in that** the pockets (49) for receiving said at least two interfaces (43) for fastening slings are positioned on either side of a longitudinal plane of the handling assembly (31).

5. The handling assembly (31) according to any one of claims 1 to 4, **characterized in that** the handling envelope (35) includes a lateral extension (39) which is shaped to at least partially cover the circumference of a downstream edge (41) of the air inlet (33) of the nacelle when the propulsion unit is mounted on the handling assembly (31).

6. The handling assembly (31) according to any one of claims 1 to 5, **characterized in that** it includes an inflatable flexible element (57), coming into contact, when said inflatable flexible element (57) is inflated, at least with an inner wall of the air inlet (33) of the nacelle when the propulsion unit is mounted on said handling assembly (31).

7. The handling assembly (31) according to claim 6, **characterized in that** the inflatable flexible element (57) occupies the entire inner space defined by the inner wall of the air inlet (33) of the nacelle when said inflatable flexible element (57) is inflated and when the propulsion unit is mounted on said handling assembly (31).

8. The handling assembly (31) according to any of claims 6 or 7, **characterized in that** the inflatable flexible element (57) includes an upstream protuberance (61) coming into contact with a leading edge of the air inlet (33) of the nacelle when said inflatable flexible element (57) is inflated and when the propulsion unit is mounted on said handling assembly (31).

9. The handling assembly (31) according to any one of claims 6 to 8, **characterized in that** it includes main fastening straps (65), a first end (67) of which is attached to the inflatable flexible element and a second end (69) of which is attached to the handling envelope (35).

10. The handling assembly (31) according to any one of claims 6 to 9, **characterized in that** it includes a circumferential master strap (75), positioned on a flange for fastening the air inlet (33) of the nacelle upstream of a fan casing of the turbojet engine.

11. The handling assembly (31) according to claim 10, **characterized in that** it includes additional fastening straps (77), a first end of which is attached to the circumferential master strap (75) and a second end of which is attached to the handling envelope (35).

12. A handling method for handling a propulsion unit, said propulsion unit comprising:
- a nacelle comprising an air inlet (33), and
- an aircraft turbojet engine (71), including a fan casing, on which said air inlet (33) of said nacelle is attached,
said handling method being **characterized in that** it includes the following successive steps aiming at:
- covering at least the half-circumference of an outer wall (37) of the air inlet (33) of the nacelle with a handling envelope (35) of an assembly according to any of claims 1 to 11;
- positioning the interfaces (43) for fastening slings on the handling envelope (35) of the assembly according to any of claims 1 to 11;
- connecting the interfaces (43) for fastening slings to a hoisting system external to said handling assembly (31) by slings;
- detaching said air inlet (33) from the fan casing of the turbojet engine (71).

13. The handling method for handling a propulsion unit according to claim 12, **characterized in that** it includes a first additional step prior to the step consisting in covering at least the half-circumference of the outer wall of the air inlet of the nacelle with the handling envelope, the first additional step aiming at inflating an inflatable flexible element (57) of the handling assembly (31) inside an inner space defined by an inner wall of the air inlet (33) of the nacelle until said flexible element comes into contact at least with the inner wall of the air inlet (33) of the nacelle.

14. The handling method for handling a propulsion unit according to any of claims 12 or 13, **characterized in that** it includes a second additional step subsequent to the step consisting in detaching the air inlet from the fan casing of the turbojet engine, the second additional step aiming at securing the handling assembly (31) by attaching a first end (67) of main fastening straps (65) to the inflatable flexible element (57) and a second end (69) of said main fastening straps (65) to the handling envelope (35).

15. The handling method for handling a propulsion unit according to claim 14, **characterized in that** it includes a third additional step, prior to the step in which the air inlet (33) is detached from the fan casing of the turbojet engine (71), aiming at installing a circumferential master strap (75) on a fastening flange (73) of the air inlet (33) of the nacelle upstream of the fan casing of the turbojet engine and at attaching said master strap (75) to the inflatable flexible element of the handling envelope (35) by additional fastening straps (77).
